# FASCICULE DE BREVET EUROPEEN

(11) **EP 0 612 466 B1**
(45) Date de publication et mention de la délivrance du brevet: **14.10.1998**
(21) Numéro de dépôt: 94400392.0
(22) Date de dépôt: 23.02.1994
(51) Int. Cl.: A01C 11/02

(54) **Module pour planteuse de mini-mottes cultivées dans des plateaux alvéolés**
Module um Pflanzensetzlinge aus einen Behälter mit Aufnahmen zu Pflanzen
Module for soil plug planter

(30) Priorité: 26.02.1993 FR 9302400
(43) Date de publication de la demande: 31.08.1994
(73) Titulaire: REGERO, Société Anonyme dite:, F-44084 Nantes Cedex (FR)
(72) Inventeur: Pogu, Christian, F-44120 Basse Goulaine (FR); Guichon, Gildas, F-44000 Nantes (FR); Pinson, Dominique, F-44000 Nantes (FR)
(74) Mandataire: Phélip, Bruno

(56) Documents cités:
- EP-A- 0 043 427
- EP-A- 0 396 208
- DE-A- 3 942 599
- FR-A- 2 622 387
- FR-A- 2 658 980

## Description

La présente invention concerne un perfectionnement aux modules de plantation utilisés sur des planteuses de mini-mottes qui se développent dans des plateaux munis d'une multitude d'alvéoles.

Il existe une très grande variété de planteuses automatiques du type compactes ou du type comportant une pluralité de modules juxtaposés.

Cette variété de machines va de pair avec une grande variété des plants.

Une machine comme celle décrite dans le document EP-A-43427, est adaptée à certains types de plants en forme de mottes cylindriques, très compactes avec une plante dont le feuillage est extrêmement réduit c'est-à-dire ne représente que quelques millimètres. Une telle machine ne peut fonctionner avec des plants qui possèdent un feuillage important de 10 à 20 cm et qui, compte-tenu de la densité des mottes par plateau, fait que les feuilles des différents plants sont emmêlées.

La machine décrite dans le document FR-A-2658980, qui divulgue le préambule de la revendication 1, permet de prélever des plants cultivés en mottes dans des plateaux, dont le feuillage est déjà bien développé.

Pour prélever les plants dans les plateaux, on réalise un déplacement vertical du plateau afin de prélever chaque rangée et, pour vider chaque rangée, on utilise des poussoirs en nombre limité, deux ou trois avec, en vis-à-vis des poussoirs, des pinces qui transfèrent les mottes vers le système de mise en terre. Le plateau est animé, en plus du mouvement vertical, d'un mouvement horizontal pour présenter les cases contenant les mottes aux différents poussoirs qui sont chargés de l'éjection.

Dans cette machine, le nombre de poussoirs correspond au nombre de pinces de prise en charge des mottes.

La présente invention propose une machine qui permet de prélever et de repiquer des plants cultivés en mottes dans des plateaux, lesquels plants pouvant comporter un feuillage particulièrement développé pouvant atteindre 10 à 20 cm.

De plus cette machine présente l'avantage d'être particulièrement compacte.

Par ailleurs, l'invention propose une planteuse constituée de modules. L'automaticité du fonctionnement de ces modules est traitée avec des moyens essentiellement mécaniques,ce qui permet de faciliter la maintenance et l'entretien.

Le module selon l'invention comprend, rassemblés sur un même châssis :
- un chargeur muni d'une part, de moyens pour accueillir au moins un plateau disposé dans un plan longitudinal sensiblement vertical et parallèle à la ligne de plantation, et d'autre part, des moyens pour déplacer ce plateau de haut en bas, rangée par rangée, au fur et à mesure du vidage ;
- un système d'éjection des mini-mottes d'une même rangée, par groupes de mini-mottes régulièrement espacées, chaque groupe comprenant un nombre de mini-mottes qui est un sous-multiple du nombre total contenu dans une même rangée
- des moyens de prise en charge du groupe de mini-mottes éjectées, et des moyens de transfert vers un dispositif de mise en terre, lesquels moyens sont constitués d'une batterie de pinces dont le nombre est égal au nombre d'alvéoles d'une rangée du plateau, lesquelles pinces sont opérationnelles à tour de rôle pour prendre en charge ledit groupe de mini-mottes éjectées.

Comme pour les machines décrites dans les documents précités, le chargeur reçoit le plateau positionné dans un cadre qui est guidé verticalement au moyen de glissières solidaires du châssis, lequel cadre comporte latéralement, des index correspondant aux rangées du plateau, lesquels index coopèrent avec au moins une roue dentée qui est commandée pour faire avancer rangée par rangée ledit plateau.

Le système d'éjection est constitué de poussoirs horizontaux dont le nombre correspond au nombre de mini-mottes faisant partie du groupe à extraire, lesquels poussoirs sont regroupés sur un même support mobile selon deux axes perpendiculaires : - un axe transversal pour éjecter les mini-mottes hors de leurs alvéoles, - un axe longitudinal pour décaler les poussoirs afin de procéder à l'éjection de chaque groupe de mini-mottes d'une même rangée, ledit support étant mobile au moyen d'un système de cames montées sur un seul arbre disposé longitudinalement derrière le plateau.

Selon une autre disposition de l'invention, le module comporte un écran d'aide au démariage des mini-mottes ; cet écran est disposé devant le plateau, au-dessus de la batterie de pinces, pour retenir le feuillage des mini-mottes à l'exception du feuillage des mini-mottes de la rangée la plus basse ; sa position est réglable par rapport au plateau pour tenir compte de la taille du feuillage des plants.

Selon une autre disposition de l'invention, la batterie de pinces qui comporte autant de pinces que le plateau comporte d'alvéoles, est articulée longitudinalement sur le châssis autour d'un arbre parallèle aux rangées du plateau, et elle est soumise à un seul arbre de commande muni d'un ensemble de cames pour réaliser à la fois le mouvement de basculement de la batterie de pinces entre la position de prise en charge et la position de largage, et le mouvement de fermeture des pinces au moment de la prise en charge et d'ouverture au moment du largage.

Toujours selon l'invention, la batterie de pinces est constituée d'une plaque de tôle dans laquelle sont découpées les branches fixes. Les branches mobiles sont articulées sur ladite plaque et reliées entre elles par une tige de manoeuvre pour réaliser la fermeture et l'ouverture de ces pinces.

Selon une autre disposition de l'invention, la batterie de pinces est recouverte partiellement d'une plaque souple en matériau du genre caoutchouc, pour recevoir le feuillage des plants des mini-mottes.

Selon une autre disposition de l'invention, le module comporte, positionné derrière la batterie de pinces lorsqu'elle est en position de largage, un peigne rotatif qui provoque dans un premier temps le basculement des mottes par une poussée sur la plaque élastique, puis une éjection éventuelle des mini-mottes par un passage dans les pinces si ces dernières ne se sont pas libérées naturellement au moment de l'ouverture des pinces.

Toujours selon l'invention, le dispositif de transfert des mini-mottes vers le dispositif de mise en terre associé au module, comprend un convoyeur sans fin disposé longitudinalement sous la batterie de pinces, devant le chargeur, lequel convoyeur est constitué de compartiments formés par une plaque de fond fermée par un rebord à l'équerre disposé transversalement et par le rebord du compartiment adjacent ; la plaque de chaque compartiment forme une sole d'accueil de ces mini-mottes disposées dans le sens transversal ; la longueur desdites plaques étant égale à la distance entre deux poussoirs, c'est-à-dire à l'intervalle entre deux mini-mottes adjacentes d'une même rangée, multiplié par le nombre de groupes de minimottes à extraire sur une même rangée.

Selon une autre disposition de l'invention, le module comporte un magasin pour plateaux vides, disposé sous le chargeur, muni d'un fond incliné pour éloigner les plateaux vides du convoyeur et d'un levier d'éjection desdits plateaux vides, lequel levier est muni d'un contrepoids mis en charge par le plateau lui-même au fur et à mesure de sa descente.

L'invention concerne également une planteuse de mini-mottes comportant au moins un module tel que décrit précédemment.

L'invention sera encore détaillée à l'aide de la description suivante d'un mode de réalisation, et des dessins annexés donnés à titre indicatif et dans lesquels :
- la figure 1 est une vue d'ensemble schématique en perspective d'un module, selon l'invention ;
- la figure 2 est une vue schématique du module illustrant les fonctions des différents organes entrant dans sa composition ;
- la figure 3 illustre la batterie de pinces représentée en plusieurs tronçons ;
- la figure 4 est une coupe selon 4-4 de la figure 3.

Le module est destiné à être relié au bâti général de la planteuse, non représentée, sur lequel on trouve entre autres, les moyens qui permettent l'entraînement des différents organes.

Chaque module comprend plusieurs éléments rassemblés sur un châssis 1. L'un de ces éléments est constitué par un chargeur 2, ou magasin, dans lequel l'opérateur insère au moins un plateau 3.

Le plateau 3 comporte une multitude d'alvéoles 4 renfermant des mini-mottes 5. Ces mini-mottes sont disposées selon des rangées 6 et des colonnes 7.

Les plateaux sont de formes et dimensions variables. Ainsi, on trouve des plateaux munis de 240 alvéoles 12 alvéoles par rangée et 20 alvéoles par colonne. On trouve également des plateaux comportant 285 alvéoles : 15 alvéoles par rangée 6 et 19 alvéoles par colonne 7.

Le chargeur 2 reçoit le plateau 3 par l'intermédiaire d'un cadre 8 dont la forme et les dimensions dépendent du type de plateau. Ce cadre 8 est guidé latéralement au moyen de glissières 9 qui sont solidaires du châssis 1 et qui forment la structure du chargeur 2. Ces glissières 9 sont verticales et se situent dans le plan longitudinal du module c'est-à-dire dans un plan qui est parallèle à la ligne de plantation 10. De cette façon, le plateau 3 est disposé verticalement sur la planteuse, dans un plan longitudinal, c'est-à-dire un plan qui est parallèle à la ligne de plantation 10.

On remarque que le cadre 8 comporte, latéralement, des index 11 en forme d'orifices situés au niveau de chaque rangée 6. Ces orifices 11 coopèrent de chaque côté de préférence, avec une roue dentée 12 disposée sur un arbre 13 derrière le plateau 3. Cet arbre 13 est entraîné de façon à faire avancer le plateau 3 rangée par rangée au fur et à mesure du vidage.

Le vidage des rangées 6 résulte de l'éjection des mini-mottes 5. Le système d'éjection 14 qui constitue un deuxième élément du module, comprend des poussoirs 15 réunis sur un même support 16.

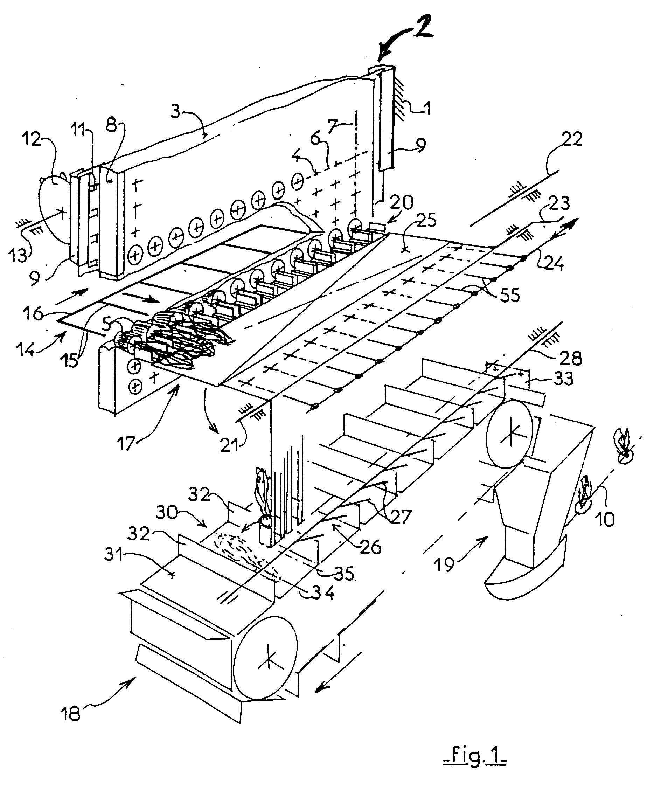

On remarque, figure 1, que le plateau 3 comporte 12 mini-mottes 5 sur une même rangée 6. Le système d'éjection comporte 6 poussoirs 15. Le vidage d'une rangée 6 s'effectue en deux opérations, par éjection de deux groupes de six mini-mottes 5.

On remarque que les poussoirs 15 sont espacés d'une distance qui correspond à deux fois l'entraxe d'alvéoles adjacentes 4 sur une rangée 6.

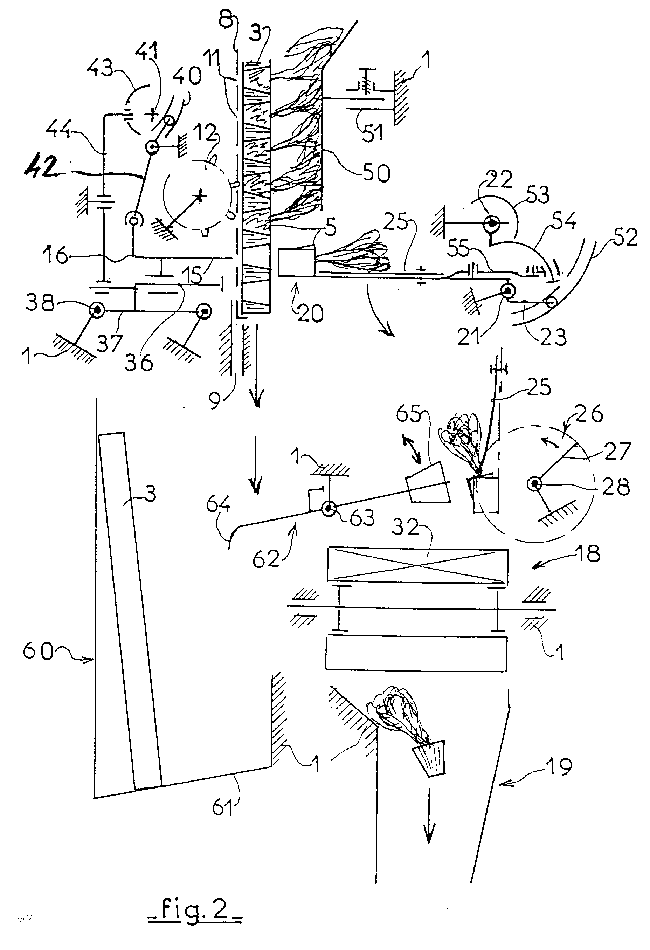

Le système d'éjection 14 est animé d'un mouvement transversal pour l'éjection et d'un mouvement longitudinal pour passer d'un groupe à l'autre. Ces mouvements résultent d'un mécanisme qui apparaît de façon plus détaillée sur la figure 2.

Le module comporte d'autres éléments constitués d'un système 17 de prise en charge des mini-mottes 5 qui sont éjectées du plateau 3 d'un système de transfert 18 des mini-mottes et d'un dispositif 19 de mise en terre.

Le dispositif 19 de mise en terre est simplement illustré figures 1 et 2. Il correspond à un système de mise en terre tel que décrit dans le document FR-A-2 575 030.

Les moyens de prise en charge des mini-mottes sont constitués d'une batterie de pinces 20, articulée autour d'un axe 21 qui est disposé devant le plateau 3, parallèle aux rangées 6. Cet axe 21 se situe sensiblement au même niveau que la rangée de mottes à prendre en charge.

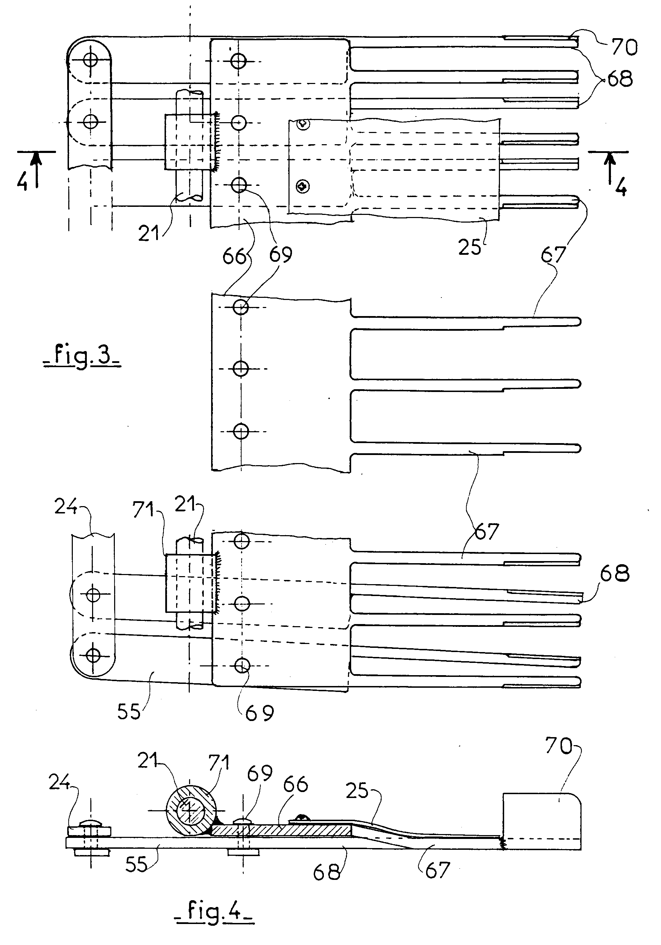

La batterie de pinces 20 est représentée figure 1 de façon schématique, à l'horizontale, pour recevoir un groupe de mini-mottes 5 et, partiellement, à la verticale, c'est-à-dire dans sa position qui permet de larguer ces mini-mottes sur le système de tranfert 18. Le mouvement de la batterie de pinces 20 s'effectue au moyen d'un arbre de commande 22 sur lequel est rassemblé un ensemble de cames qui réalise à la fois le basculement de la batterie de pinces par action sur le bras 23 situé à l'extrémité de l'arbre 21 et la fermeture ou l'ouverture des pinces par action sur la tige générale de manoeuvre 24 disposée à l'extrémité de ladite batterie de pinces 20. Le détail de cette commande est schématisé figure 2 et la batterie de pinces 20 est représentée de façon plus précise figures 3 et 4.

On remarque, toujours figure 1, disposée sur la batterie de pinces 20, une plaque 25. Cette plaque 25 est une plaque souple en matériau du type caoutchouc, fixée sur la batterie de pinces 20. Elle reçoit le feuillage des plants des mini-mottes 5. Sa fonction, lorsque les pinces prennent en charge les mini-mottes 5, est de protéger le feuillage. Lorsque la batterie de pinces 20 est en position verticale pour le largage, cette plaque 25 sert à faire basculer les mini-mottes pour les positionner correctement sur le système de transfert 18.

Le basculement des mini-mottes 5 avant largage, est réalisé au moyen d'un peigne 26 disposé à l'arrière de la batterie de pinces 20 lorsqu'elle est en position de largage au-dessus du système de transfert 18. Ce peigne 26 comporte des dents 27 montées sur un arbre 28. Le nombre de dents du peigne correspond au nombre de pinces. Ces dents 27 pénètrent dans les pinces et provoquent un basculement de la plaque 25 avant d'éjecter les mini-mottes si elles ne se sont pas libérées naturellement au moment de l'ouverture des pinces.

Le système de transfert 18 est constitué d'un convoyeur sans fin comprenant des compartiments 30 juxtaposés, aptes à recevoir les mini-mottes 5 larguées par la batterie de pinces 20. Chaque compartiment est constitué d'une plaque horizontale 31 dans laquelle tombe la mini-motte 5 et il est délimité par un rebord 32 à l'équerre solidaire de la plaque 31 et par le rebord 32 du compartiment 30 adjacent. Les rebords 32 sont disposés transversalement. Les compartiments 30 se déchargent automatiquement dans le dispositif de mise en terre 19. Un volet souple 33 permet de retenir le feuillage du plant de la mini-motte 5 pour provoquer un basculement du plant et une chute de la mini-motte à la verticale dans le dispositif de mise en terre.

Le mouvement d'avance des compartiments 30 est continu et synchronisé avec le mouvement de la batterie de pinces 20 ; le nombre de compartiments disposés sous les pinces est égal au nombre de poussoirs 15.

La plaque 31 fait office de sole pour accueillir la motte et le plant ; sa longueur correspond à la distance entre deux poussoirs 15 c'est-à-dire, d'une manière générale, à l'entraxe entre deux alvéoles 4 d'une même rangée 6 multiplié par le nombre de groupes de mini-mottes prélevées sur ladite rangée.

On remarque en effet figure 1, représentées par les traits d'axes 34 et 35, les deux positions possibles des mini-mottes 5 larguées par la batterie de pinces, sur la plaque 31.

La figure 2 représente de façon schématique, l'ensemble des éléments fonctionnels entrant dans la composition du module.

On remarque le plateau 3 disposé dans le cadre 8 qui est lui-même guidé dans les glissières 9. Derrière le plateau 3, on trouve le système d'éjection constitué des poussoirs 15. Ces poussoirs 15 sont montés sur un support 16 qui est guidé en translation sur des tiges 36, lesquelles tiges sont solidaires d'un plateau 37 qui est guidé longitudinalement sur des barres 38 solidaires du châssis 1.

Les tiges 36 permettent le mouvement transversal du support 16 pour réaliser l'éjection des mini-mottes 5 au moyen des poussoirs 15. Ce mouvement est provoqué par un système de cames 40 solidaires d'un arbre 41 disposé longitudinalement derrière le plateau 3. Le système de cames coopère avec un levier 42 basculant, articulé sur le châssis 1, et qui agit sur le support 16.

Le décalage longitudinal du support 16 résulte du mouvement du plateau 37 sur les barres 38. Ce mouvement est réalisé au moyen d'un second système de cames 43 montées sur l'arbre 41, par l'intermédiaire d'un autre levier 44 du type basculant, articulé sur le châssis 1 et interposé entre la came 43 et le plateau 37. On remarque également la roue dentée 12 qui fait progresser le plateau 3 rangée par rangée au fur et à mesure de l'éjection des mini-mottes 5.

La came 43 est par exemple une came type tambour, à double effet qui, dans le cas d'un plateau à 240 alvéoles comme représenté figure 1, positionne le plateau 37 à deux endroits différents. Dans le cas d'un plateau du type à 285 alvéoles, la came 43 positionne le plateau 37 à trois endroits distincts pour une éjection des mini-mottes 5 par groupes de cinq. Dans ce dernier cas, le nombre de poussoirs 15 est également de cinq.

Devant le plateau 3, au-dessus de la batterie de pinces 20, on remarque un écran 50 qui retient le feuillage des plants. Cet écran retient le feuillage des rangées supérieures et réalise une sorte de démariage de la rangée inférieure. Cet écran 50 est solidaire du châssis 1 au moyen d'un support 51 qui permet de régler sa distance par rapport au plateau, pour tenir compte de la taille du feuillage des plants.

La batterie de pinces 20 est articulée autour de l'axe 21 et elle est manoeuvrée par un système de cames montées sur l'arbre 22. On distingue une came 52 du type double effet qui manoeuvre la batterie de pinces 20 par l'intermédiaire du levier 23 pour la faire passer de la position horizontale de prise en charge des mini-mottes à la position verticale de largage de ces mini-mottes. Un autre système de cames 53 comande l'ouverture et la fermeture des pinces. Ce système de cames 53 agit sur un levier 54 en forme d'arc de cercle centré sur l'axe 21. Ce levier 54 est guidé en translation sur l'arbre 22 et il commande la tige 24 qui manoeuvre l'ensemble des pinces et en particulier le bras fixe 55 de chacune des pinces.

L'arbre 22 est synchronisé avec l'arbre 41. Le nombre de tours de l'arbre 41 est divisé par deux par rapport à celui de l'arbre 22 dans le cas d'un plateau muni de douze alvéoles par rangée. Dans le cas d'un plateau muni de quinze alvéoles par rangée, le rapport est de 3.

On remarque, toujours figure 2, le peigne 26 disposé derrière la batterie de pinces 20 lorsqu'elle se situe en position de largage. Les dents 27 du peigne viennent faire basculer la plaque élastique 25 fixée sur la batterie de pinces 20 et circulent ensuite dans les pinces pour éjecter les mini-mottes 5 dans les compartiments du système de transfert 18.

Le système de transfert 18 se situe sous la batterie de pinces 20. On remarque qu'il est décalé par rapport au plan vertical des plateaux 3 ; il est situé devant ce plan vertical. Ce système de transfert 18 alimente le dispositif de mise en terre 19.

On remarque encore, figure 2, un magasin 60 chargé de récupérer les plateaux 3 qui sont vides. Ce magasin 60 est solidaire du châssis 1 et il comporte un fond 61 qui est incliné pour permettre une progression des plateaux 3 vers l'extérieur du module c'est-à-dire que ces plateaux tendent à s'écarter du système de transfert 18.

Pour éviter qu'un plateau vide 3 ne reste en position sous le plateau situé dans le chargeur, un levier 62 provoque, dès que le plateau 3 tombe dans le magasin 60, un basculement de ce plateau vers l'extérieur. Ce levier 62 est articulé sur le châssis 1 autour d'un axe 63, et il comporte d'un côté, sous le chargeur 2, un patin 63 qui bascule lorsque le plateau 3 descend. L'autre extrémité du levier 62 comporte un contrepoids 65 qui permet le retour automatique du levier 62 à l'horizontale et, en même temps, de pousser le plateau 3 dans le magasin 60. Ce contrepoids 65 est mis en charge automatiquement par le plateau qui descend du chargeur.

La batterie de pinces est représentée de façon plus détaillée figure 3 et figure 4. Elle est représentée vue de dessus, figure 3, en plusieurs tronçons. Le tronçon de cette batterie, disposé au centre, figure 3, se présente sous la forme d'une plaque de tôle 66 dans laquelle, au moyen de découpes, sont formées de façon monobloc, les branches fixes 67 des pinces.

Les branches mobiles 68, représentées sur les tronçons latéraux figure 3, sont rapportées et articulées sur la plaque 66 autour de pivots 69.

Globalement, l'épaisseur de la batterie de pinces correspond à deux fois l'épaisseur de la plaque de tôle 66. Les branches mobiles 68 sont en effet découpées dans le même type de tôle que la plaque 66.

Les mâchoires des pinces sont constituées de plaquettes 70 rapportées et soudées aux extrémités des branches fixes 67 et mobiles 68.

Les branches mobiles comportent une portion 55 qui s'étend au-delà des pivots 69 ; elles sont reliées entre elles par la tige de manoeuvre 24 qui coopère avec le levier de manoeuvre 54 qui apparait figure 2.

On remarque, figure 4, que les branches fixes 67 sont décalées par rapport au plan de la plaque 66 pour se positionner au même niveau que les branches mobiles 68.

On remarque également, figures 3 et 4, la plaque 25 en caoutchouc, posée sur les pinces, en arrière des mâchoires formées par les plaquettes 70. Cette plaque 25 est fixée par tout moyen approprié du genre vis, ou par collage.

La plaque 66 comporte des douilles 71 disposées sur le côté opposé aux mâchoires. Ces douilles 71 servent à fixer la batterie de pinces sur l'arbre 21.

Ce type de batterie de pinces présente l'avantage d'une très grande compacité. Par ailleurs, il constitue un ensemble facilement interchangeable. En effet, selon le type de plateau, il faut utiliser une batterie de pinces différente, pouvant saisir 12 mini-mottes en deux groupes ou 15 mini-mottes en trois groupes.

Sur chaque module, on peut adapter et changer facilement tous les éléments qui dépendent du type de plateaux et en particulier - les poussoirs 15, - la came 43 qui assure leur décalage longitudinal, - la batterie de pinces 20, - le peigne 26 et les compartiments 30 du convoyeur 18.

Cette conception de chaque module diminue singulièrement les coûts de fabrication.

## Revendications

1. Module pour planteuse de mini-mottes cultivées en rangs et colonnes dans un plateau alvéolé, comprenant, rassemblés sur un même châssis (1) :
- un chargeur muni d'une part, de moyens pour accueillir au moins un plateau (3) disposé dans un plan longitudinal sensiblement vertical et parallèle à la ligne de plantation (10), et, d'autre part, de moyens pour déplacer ce plateau de haut en bas, rangée par rangée, au fur et à mesure du vidage ;
- un système d'éjection (14) des mini-mottes d'une même rangée, par groupes de mini-mottes régulièrement espacées, chaque groupe comprenant un nombre de mini-mottes qui est un sous-multiple du nombre total de mini-mottes disposées dans une même rangée du plateau alvéolé ;
- des moyens de prise en charge du groupe de mini-mottes éjectées, et des moyens de transfert (18) de ces dernières vers un dispositif de mise en terre, lesquels moyens de prise en charge sont constitués d'une batterie de pinces (20), lesquelles pinces sont opérationnelles à tour de rôle pour prendre en charge ledit groupe de mini-mottes éjectées caractérisé en ce que le nombre de pinces est égal au nombre d'alvéoles d'une même rangée sur le plateau.

2. Module pour planteuse de mini-mottes selon la revendication 1, caractérisé en ce que le système d'éjection (14) est constitué de poussoirs (15) horizontaux, dont le nombre correspond au nombre de mini-mottes faisant partie du groupe à extraire, lesquels poussoirs sont regroupés sur un même support (16) qui est mobile selon deux axes perpendiculaires : - un axe transversal (36) pour éjecter les mini-mottes hors de leurs alvéoles, - un axe longitudinal (38) pour décaler les poussoirs afin de procéder à l'éjection des différents groupes de mini-mottes d'une même rangée (6), lequel support est animé au moyen d'un système de cames (40, 43) montées sur un arbre unique (41) qui est disposé longitudinalement derrière le plateau (3).

3. Module pour planteuse de mini-mottes selon l'une quelconque des revendications 1 ou 2, caractérisé en ce qu'il comporte la batterie de pinces (20) articulée autour d'un arbre (21) qui est situé devant le plateau (3), parallèlement aux rangées (6), laquelle batterie de pinces est manoeuvrée au moyen d'un seul arbre (22) comportant un ensemble de cames (52, 53) pour réaliser à la fois le mouvement de basculement entre la position de prise en charge et la position de largage, et le mouvement d'ouverture et de fermeture des pinces.

4. Module pour planteuse de mini-mottes selon la revendication 3, caractérisé en ce que la batterie de pinces (20) est constituée - d'une plaque de tôle dans laquelle sont découpées les branches fixes (67) des pinces, et - de branches mobiles (68), lesquelles branches mobiles sont articulées autour d'un pivot (69) sur ladite plaque et sont reliées entre elles par une tige de manoeuvre (24) qui réalise la fermeture et l'ouverture de l'ensemble des pinces.

5. Module pour planteuse de mini-mottes selon la revendication 4, caractérisé en ce que la batterie de pinces (20) est recouverte partiellement, d'une plaque (25) en matériau souple du genre caoutchouc, positionnée pour recevoir le feuillage des plants des mini-mottes.

6. Module pour planteuse de mini-mottes selon la revendication 5, caractérisé en ce qu'il comporte un peigne (26) rotatif, positionné derrière la batterie de pinces (20) lorsqu'elle est en position verticale de largage, lequel peigne comporte des dents (27) qui provoquent, grâce à la plaque souple (25) le basculement des mini-mottes (5) au moment de leur largage et, ensuite, éventuellement, l'évacuation des mini-mottes des pinces, si celles-ci ne se sont pas libérées naturellement au moment de l'ouverture desdites pinces.

7. Module pour planteuse de mini-mottes selon l'une quelconque des revendications 1 à 6, caractérisé en ce que les moyens de transfert (18) des mini-mottes éjectées, vers le dispositif de mise en terre (19), comprennent un convoyeur d'alimentation sans fin, disposé longitudinalement sous la batterie de pinces (20), devant le plan du plateau (3), lequel convoyeur est constitué de compartiments (30) formés chacun par une plaque (31) fermée par un rebord (32) à l'équerre disposé transversalement et par le rebord (32) du compartiment adjacent, laquelle plaque (31) forme une sole d'accueil des mini-mottes posées dans le sens transversal, la longueur desdites plaques étant égale à l'espace entre deux poussoirs (15) c'est-à-dire à l'intervalle entre deux mini-mottes d'une même rangée multiplié par le nombre de groupes de mini-mottes.

8. Module pour planteuse de mini-mottes selon l'une quelconque des revendications 1 à 7, caractérisé en ce qu'il comporte un magasin (60) recevant les plateaux (3) vides, lequel magasin est disposé sous le chargeur (9) et comporte un fond incliné (61) pour écarter les plateaux vides vers l'extérieur du module, et un levier (62) pour repousser automatiquement le plateau vide, lequel levier est actionné par un contrepoids (65) mis en charge par le plateau (3) qui descend dans le magasin.

9. Module pour planteuse de mini-mottes selon l'une quelconque des revendications 1 à 8, caractérisé en ce qu'il comporte un écran (50) disposé devant le plateau (3) au-dessus de la batterie de pinces (20) et dont la position est réglable par rapport audit plateau, pour retenir le feuillage des plants des mini-mottes, à l'exception du feuillage des plants des mini-mottes de la rangée la plus basse prête à être éjectée.

10. Planteuse de mini-mottes cultivées dans des plateaux alvéolés, caractérisée en ce qu'elle comporte au moins un module de plantation selon l'une quelconque des revendications 1 à 9.

## Claims

1. A module for soil plug planter, for small blocks grown in rows and columns in an alveolar plate, comprising, gathered on the same chassis (1):
- a loader fitted on the one hand, with means to accommodate at least one plate (3) arranged on a longitudinal plane, more or less vertical and parallel to the plantation line (10), and on the other hand, with means for moving this plate from top to bottom, row by row, as the emptying process progresses;
- an ejection system (14) for the small blocks of the same row, by groups of small blocks regularly spaced, each group comprising a number of small blocks which is a sub-multiple of the total number of small blocks arranged in the same row of the alveolar plate;
- means for picking up the group of ejected small blocks, and means to transfer (18) the latter towards a planting device, whereby the said pick-up means consist of a set of claws (20), whereas the said claws are operational in turn in order to pick up the said group of ejected small blocks, characterised in that the number of claws is equal to the number of honeycombs of the same row on the plate.

2. A module for soil plug planter according to claim 1, characterised in that the ejection system (14) consists of horizontal pushers (15), whose number corresponds to the number of small blocks belonging to the group to be extracted, whereby the said pushers are gathered on the same bracket (16) which is mobile along two perpendicular axes : - a transversal axis (36) to eject the small blocks out of their honeycombs, - a longitudinal axis (38) to offset the pushers in order to eject the different groups of small blocks of the same row (6), whereas the said bracket is actuated by a system of cams (40, 43) installed on a single shaft (41) which is arranged longitudinally behind the plate (3).

3. A module for soil plug planter according to any of the claims 1 or 2, characterised in that it comprises the set of claws (20) articulated round a shaft (21) situated in front of the plate (3), parallel to the rows (6), whereas the said set of claws is actuated via a single shaft (22) comprising a set of cams (52, 53) to carry out at the same time the tipping movement from the pick-up position and the release position, and the opening and closing movement of the claws.

4. A module for soil plug planter according to claim 3, characterised in that the set of claws (20) consists - of a sheet iron plate in which the fixed branches of the claws (67) have been cut out , and - of mobile branches (68), whereas the said mobile branches are articulated round a pivot (69) on the said plate and are connected to one another by a control rod (24) which closes and opens the set of claws.

5. A module for soil plug planter according to claim 4, characterised in that the set of claws (20) is covered partially with a plate (25) made of a flexible material such a rubber, positioned to accommodate the foliage of the seedlings of the small blocks.

6. A module for soil plug planter according to claim 5, characterised in that it comprises a rotary comb (26), positioned behind the set of claws (20) when it is in vertical release position, whereas the said comb comprises teeth (27) which cause, thanks to the flexible plate (25) the tipping of the small blocks (5) at release and, then, finally, the evacuation of the small blocks from the claws, if the latter are not released naturally when the said claws open.

7. A module for soil plug planter according to any of the claims 1 to 6, characterised in that the means (18) for transferring the ejected small blocks to the planting device (19), comprise a worm conveyor, arranged longitudinally under the set of claws (20), in front of the plane of the plate (3), whereas the said conveyor consists of compartments (30) each formed by a plate (31) closed by a rim (32) at right angle arranged transversally and by the rim (32) of the adjacent compartment, whereas the said plate (31) forms a sole for accommodating the small blocks arranged transversally, whereby the length of the said plates is equal to the space between two pushers (15), i.e. the interval between two small blocks of the same row multiplied by the number of groups of small blocks.

8. A module for soil plug planter according to any of the claims 1 to 7, characterised in that it comprises a magazine (60) receiving the empty plates (3), whereas the said magazine is arranged under the loader (9) and comprises a tilted bottom (61) for moving the empty plates outside the module, and a lever (62) for pushing the empty plate automatically away, whereby the said lever is actuated by a counterweight (65) loaded by the plate (3) which descends inside the magazine.

9. A module for soil plug planter according to any of the claims 1 to 8, characterised in that it comprises a screen (50) arranged in front of the plate (3) above the set of claws (20) and whose position is adjustable with respect to the said plate, to retain the foliage of the seedlings of the small blocks, with the exception of the foliage of the seedlings of the small blocks of the lowest row ready for ejection.

10. A planter for small blocks grown in alveolar plates, characterised in that it comprises at least one plating module according to any of the claims 1 to 9.

## Patentansprüche

1. Modul für eine Pflanzmaschine für kleine Ballen, die in Reihen und Spalten in einer wabenförmigen Platte kultiviert wurden, das auf demselben Rahmen (1) zusammengefügt umfaßt:
- eine Beladeeinrichtung, die einerseits mit Mitteln zur Aufnahme wenigstens einer Platte (3), die in einer in Längsrichtung verlaufenden Ebene angeordnet ist, die im wesentlichen vertikal und parallel zur Pflanzlinie (10) verläuft, und andererseits mit Mitteln zum Verschieben dieser Platte Reihe für Reihe von oben nach unten entsprechend der Entleerung versehen ist,
- eine System zum Ausstoßen (14) der kleinen Ballen derselben Reihe in regelmäßig beabstandeten Gruppen von kleinen Ballen, wobei jede Gruppe eine Anzahl von kleinen Ballen umfaßt, die eine in der Gesamtzahl der kleinen Ballen, die in derselben Reihe der wabenförmigen Platte angeordnet sind, aufgehende Zahl ist,
- Mittel zum Übernehmen der Gruppe von ausgestoßenen kleinen Ballen und Mittel (18) zum Überführen dieser letzteren zu einer Einrichtung zum Einsetzen in die Erde, welche Mittel zum Übernehmen aus einer Zangenbatterie (20) bestehen, welche Zangen sich beim Funktionsumlauf im Einsatz befinden, um die Gruppe von ausgestoßenen kleinen Ballen zu übernehmen,
dadurch gekennzeichnet, daß die Anzahl der Zangen gleich der Anzahl von Zellen in derselben Reihe auf der Platte ist.

2. Modul für eine Pflanzmaschine für kleine Ballen nach Anspruch 1, dadurch gekennzeichnet, daß das Ausstoßsystem (14) aus horizontalen Drückern (15) besteht, deren Anzahl der Anzahl von Kleinen Ballen entspricht, die einen Teil der zu entnehmenden Gruppe bilden, welche Drücker auf demselben Träger (16) zusammengefaßt sind, der in Übereinstimmung mit zwei zueinander senkrechten Achsen beweglich ist: - einer transversalen Achse (36) zum Ausstoßen der kleinen Ballen aus ihren Zellen, - einer Längsachse (38) zum Verschieben der Drücker, um den Ausstoß der verschiedenen Gruppen von kleinen Ballen derselben Reihe (6) vorzunehmen, welcher Träger mittels eines Nockensystems (40, 43) angetrieben wird, die auf einer einzigen Achse (41) angebracht sind, die in Längsrichtung hinter der Platte (3) angeordnet ist.

3. Modul für eine Pflanzmaschine für kleine Ballen nach einem der Ansprüche 1 oder 2, dadurch gekennzeichnet, daß es die Zangenbatterie (20) um eine Achse (21) herum gelenkig angebracht aufweist, die sich vor der Platte (3) parallel zu den Reihen (6) befindet, welche Zangenbatterie mittels einer einzigen Achse (22) betätigt wird, die einen Nockenaufbau (52, 53) aufweist, um die Schaukelbewegung zwischen der Übernahmeposition und der Absetzposition und die Bewegung des Öffnens und Schließens der Zangen auf einmal auszuführen.

4. Modul für eine Pflanzmaschine für kleine Ballen nach Anspruch 3, dadurch gekennzeichnet, daß die Zangenbatterie (20) aus - einer Blechplatte, in welcher die feststehenden Schenkel (67) der Zangen ausgestanzt sind, und - beweglichen Schenkeln (68) besteht, welche beweglichen Schenkel um einen Drehpunkt (69) herum auf der Platte gelenkig angebracht sind und untereinander durch eine Betätigungsstange (24) verbunden sind, die das Schließen und das Öffnen der Zangenaufbauten ausführt.

5. Modul für eine Pflanzmaschine für kleine Ballen nach Anspruch 4, dadurch gekennzeichnet, daß die Zangenbatterie (20) teilweise von einer Platte (25) aus gummiartigem, elastischem Material verdeckt ist, die so angeordnet ist, daß sie das Laub der Setzlinge der kleinen Ballen aufnimmt.

6. Modul für eine Pflanzmaschine für kleine Ballen nach Anspruch 5, dadurch gekennzeichnet, daß es einen drehenden Kamm (26) aufweist, der hinter der Zangenbatterie (20) angeordnet ist, wenn sie sich in der vertikalen Absetzposition befindet, welcher Kamm Zinken (27) aufweist, die dank der elastischen Platte (25) das Schaukeln der kleinen Ballen (5) zum Zeitpunkt ihres Absetzens und danach eventuell das Entleeren der Kleinen Ballen aus den Zangen hervorruft, wenn diese zum Zeitpunkt des Öffnens der Zangen nicht natürlich freigegeben werden.

7. Modul für eine Pflanzmaschine für kleine Ballen nach einem der Ansprüche 1 bis 6, dadurch gekennzeichnet, daß die Mittel (18) zum Überführen der ausgestoßenen kleinen Ballen zur Einrichtung (19) zum Einsetzen in die Erde einen Endlos-Beschickungsförderer umfassen, der in Längsrichtung unter der Zangenbatterie (20) vor der Ebene der Platte (3) angeordnet ist, welcher Förderer aus Abteilen (30) besteht, die jeweils von einer Platte (31) gebildet werden, die von einer quer angeordneten, rechtwinkligen Leiste (32) und von der Leiste (32) des benachbarten Abteils geschlossen werden, welche Platte (31) einen Träger zur Aufnahme der Kleinen Ballen bildet, die in transversaler Richtung angeordnet sind, wobei die Länge der Platten gleich dem Raum zwischen zwei Drückern (15) ist, d.h. dem Abstand zwischen zwei kleinen Ballen derselben Reihe, multipliziert mit der Zahl der Gruppen von kleinen Ballen.

8. Modul für eine Pflanzmaschine für kleine Ballen nach einem der Ansprüche 1 bis 7, dadurch gekennzeichnet, daß es ein Magazin (60) aufweist, das die leeren Platten (3) aufnimmt, welches Magazin unter der Beladeeinrichtung (9) angeordnet ist und einen geneigten Boden (61), um die leeren Platten zum Äußeren des Moduls hin zu entfernen, und einen Hebel (62) aufweist, um die leere Platte automatisch auszustoßen, welcher Hebel von einem Gegengewicht (65) betätigt wird, das durch die Platte (3) belastet wird und sich im Magazin absenkt.

9. Modul für eine Pflanzmaschine für kleine Ballen nach einem der Ansprüche 1 bis 8, dadurch gekennzeichnet, daß es eine Blende (50) aufweist, die vor der Platte (3) unterhalb der Zangenbatterie (20) angeordnet ist und deren Position in bezug auf die Platte einstellbar ist, um das Laub der Setzlinge der kleinen Ballen mit Ausnahme des Laubs der Setzlinge der kleinen Ballen der untersten Reihe, die zum Ausgestoßenwerden bereit ist, zurückzuhalten.

10. Pflanzmaschine für kleine Ballen, die in wabenförmigen Platten kultiviert wurden, dadurch gekennzeichnet, daß sie wenigstens ein Pflanzmodul nach einem der Ansprüche 1 bis 9 umfaßt.
